Europäisches Patentamt

European Patent Office

Office européen des brevets

(11) Veröffentlichungsnummer: **0 151 668**
A2

# (12) EUROPÄISCHE PATENTANMELDUNG

(21) Anmeldenummer: 84102928.3

(22) Anmeldetag: 15.07.81

(51) Int. Cl.⁴: **C 12 G 3/08**

(30) Priorität: 18.07.80 DE 3027319

(43) Veröffentlichungstag der Anmeldung:
21.08.85 Patentblatt 85/34

(84) Benannte Vertragsstaaten:
AT FR GB NL

(60) Veröffentlichungsnummer der früheren
Anmeldung nach Art. 76 EPÜ: **0 044 524**

(71) Anmelder: **Alfa-Laval Industrietechnik GmbH**
**Wilhelm-Bergner-Strasse**
**D-2056 Glinde(DE)**

(72) Erfinder: **Krüger, Eckhard, Prof. Dr.-Ing.**
**Remstalerstrasse 38a**
**D-1000 Berlin(DE)**

(74) Vertreter: **Stach, Harald, Dr. Dipl.-Chem.**
**Adenauerallee 30**
**D-2000 Hamburg 1(DE)**

(54) Verfahren zur Herstellung eines Diät-Bieres.

(57) Die Erfindung bezieht sich auf ein Verfahren zur Herstellung eines kohlenhydratarmen, alkoholreduzierten und kalorienarmen Diät-Bieres, bei welchem die Würze derart vergoren wird, daß die vergärbaren Kohlenhydrate und die nur schwer vergärbaren, durch Zugabe von Diastaselösung in vergärbare Kohlenhydrate umgesetzten Dextrine bis auf mindestens 0,75 g belastender Kohlenhydrate pro 100 ml Bier vergoren sind und der Alkoholgehalt des Bieres unter Vakuum herabgesetzt wird. Um ein in der Qualität verbessertes kohlenhydratarmes, alkoholreduziertes und damit kalorienarmes Diät-Bier in einem kontinuierlichen und deshalb vereinfachten Verfahren brauen zu können, erfolgt die Alkoholreduzierung in einem Dünnschicht-Verdampfer bei einer Temperatur von etwa 50°C, vorzugsweise 30°C, sowie kurzzeitig zwischen 1 und 10 Sekunden und wird die Alkoholreduzierung während der Hauptgärung im Bypass durchgeführt.

0151668

Verfahren zur Herstellung eines Diät-Bieres

Beschreibung:

Die Erfindung bezieht sich auf ein Verfahren zur Herstellung eines kohlenhydratarmen, alkoholreduzierten und damit kalorienarmen Diät-Bieres, bei welchem eine Würze derart vergoren wird, daß die vergärbaren Kohlenhydrate und die nur schwer vergärbaren, durch Zugabe von Malzauszug bzw. Diastaselösung in vergärbare Kohlenhydrate umgesetzten Dextrine bis auf mindestens 0,75 g belastender Kohlenhydrate pro 100 ml Bier vergoren sind, und der Alkoholgehalt des Biers unter Vakuum herabgesetzt wird.

Ein derartiges Verfahren ist aus der DE-PS 20 52 963 bekannt. Ferner sind Diät-Biere bekannt, deren Alkoholgehalt höher als der normaler Biere ist.

Aus der DE-AS 12 66 266 ist ein Verfahren zur Herstellung von alkoholarmem bzw. alkoholfreiem Bier bekannt, bei dem ein auf bekannte Weise hergestelltes Bier zwecks Austreibung eines mehr oder minder großen Teils seines Alkoholgehalts einer Verdampfung im Vakuum unterworfen und der

- 3 -

0151668

...sultierende Rückstand rückverschnitten und mit Kohlensäure
...prägniert wird. Zur Vermeidung von Oxydationsvorgängen
wird die Entalkoholisierung in Gegenwart von lebender Hefe
empfohlen. Es handelt sich nicht um ein Diät-Bier und es
wird das fertig ausgebraute Bier einer Entgeistung unterworfen.

Aus der DE-AS 14 42 238 ist ein Verfahren zum Herstellen
von alkoholreduziertem Bier aus fertig ausgebrautem Bier
als Ausgangspunkt unter Abtrennung des Alkohols unter
Vakuum im Dünnschichtverdampfer und Karbonisierung des
abgekühlten, vom Alkohol befreiten Anteils bekannt. Auch
hier handelt es sich wiederum nicht um ein Diät-Bier.

Der Erfindung liegt die Aufgabe zugrunde, ein in der
Qualität, insbesondere im Flavour, verbessertes kohlenhydratarmes, alkoholreduziertes und damit kalorienarmes
Diät-Bier in einem kontinuierlichen und deshalb vereinfachten Verfahren brauen zu können.

Die Lösung der gestellten Aufgabe besteht darin, daß die
Alkoholreduzierung in einem Dünnschichtverdampfer bei
einer Temperatur von etwa 50°C, vorzugsweise 30°C, sowie kurzzeitig zwischen 1 bis 10 sec. erfolgt und daß die Alkoholreduzierung während der Hauptgärung im Bypaß durchgeführt
wird. Diese spezielle Art der Alkoholreduzierung im Bypaß
während der Hauptgärung mittels Kurzzeitverdampfung hat
deshalb nicht nahegelegen, weil der Fachmann befürchten
mußte, daß die anzuwendenden Temperaturen von 30 bis 50°C
sowie die anzuwendenden Unterdrucke bis zu 0,04 bar die
Hefe schädigen würden. Es hat sich nun überraschenderweise
gezeigt, daß die Hefe trotz dieser extrem ungünstigen
Bedingungen keinen Schaden erleidet und normal weiter vergärt.

Es ist jedoch zu beachten, daß eine untere Grenze für die Alkoholminderung bei 2% liegt, wenn die Alkoholreduzierung das Flavourgefüge nicht durcheinanderbringen soll. Durch die der Alkoholabtrennung nachgeschaltete Gärung erreicht man eine Auffüllung verlorengegangener Gärungsnebenprodukte. Die Alkoholabtrennung vor einer zweiten Gärphase der Hauptgärung hat den Vorteil, daß der Abbau der Dextrine während der zweiten Gärung begünstigt wird, weil der Alkoholgehalt reduziert ist. Ein weiterer Vorteil des erfindungsgemäßen Verfahrens ist es, daß die Alkohol-Abtrennung während der Hauptgärung kostentechnisch günstiger ist.

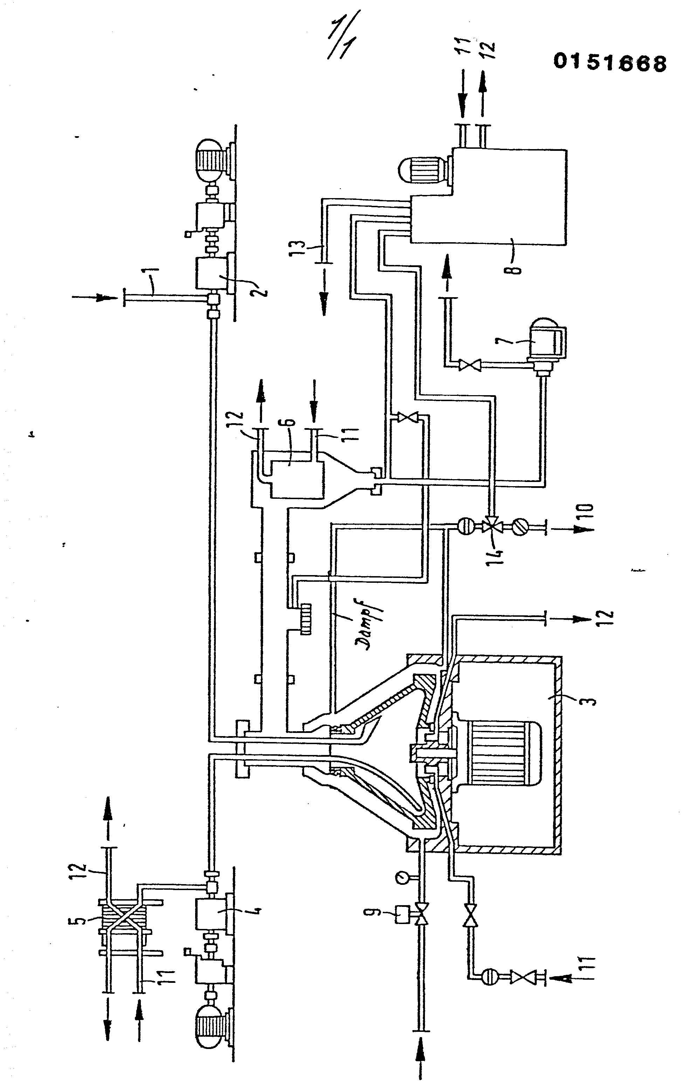

Die Durchführung des Verfahrens wird anhand der beigefügten Zeichnung beispielhaft erläutert. Die einzige Figur dieser Zeichnung zeigt ein Fließschema des bei den Versuchen zur Anwendung gebrachten Dünnschichtverdampfers.

Über die Leitung 1 und Pumpe 2 wird Bier in den Dünnschichtverdampfer 3 eingespeist und durch eine Düse auf eine rotierende Kegelfläche verteilt. Das Bier breitet sich unter dem Einfluß der Zentrifugalkraft in einer sehr dünnen turbulenten Schicht über die Heizflächen aus. In Kontaktzeiten zwischen 1 bis 10 Sekunden wird aus dem Bier Alkohol abgedampft. Das Konzentrat wird mittels einer Pumpe 4 aus dem Dünnschichtverdampfer über ein Schälrohr zu einem Plattenkühler 5 gefördert. Die alkoholhaltigen Brüden kondensieren in einem Spiralkondensator 6. Das Kondensat wird von einer Pumpe 7 und die nicht kondensierbaren Gase werden durch eine Vakuumpumpe 8 abgesaugt. Der Heizdampf wird durch ein Regelventil 9 auf konstantem Druck gehalten und tritt über einen seitlichen Stutzen in eine Grundplatte der Anlage ein.

Das auf der Heizfläche gebildete Kondensat wird durch
die Zentrifugalkraft auf die äußere Konusfläche geschleudert und über eine Vakuumpumpe 8 abgesaugt. Das Steuervakuum für das Dampfregelventil 9 wird von der Vakuumpumpe
erzeugt. Die Leitung 13 für das Steuervakuum ist in nicht
dargestellter Weise an das Regelventil 9 angeschlossen.
Die Bezugszahlen 11 und 12 kennzeichnen den Ein- und
Austritt des Kühlwassers am Dünnschichtverdampfer, Plattenwärmeaustauscher 5, Kondensator 6 und der Vakuumpumpe 8.
Bei Heizdampf über 1 bar muß ein Dreiwegehahn 14 umgestellt werden, so daß das Kondensat über einen Kondensatableiter 10 abfließen kann.

EP

EP **0151668** 77 256 L/die

15. März 1984

Prof. Dr.-Ing. Eckhard Krüger,
1000 Berlin, DE

Verfahren zur Herstellung eines Diät-Bieres

Patentanspruch:

Verfahren zur Herstellung eines kohlenhydratarmen, alkoholreduzierten und kalorienarmen Diät-Bieres, bei welchem
die Würze derart vergoren wird, daß die vergärbaren Kohlenhydrate und die nur schwer vergärbaren, durch Zugabe von
Diastaselösung in vergärbare Kohlenhydrate umgesetzten
Dextrine bis auf mindestens 0,75 g belastender Kohlenhydrate pro 100 ml Bier vergoren sind und der Alkoholgehalt
des Bieres unter Vakuum herabgesetzt wird, d a d u r c h
g e k e n n z e i c h n e t , daß die Alkoholreduzierung in
einem Dünnschichtverdampfer bei einer Temperatur von etwa 50°C,
vorzugsweise 30°C, sowie kurzzeitig zwischen 1 bis 10 sec.
erfolgt und daß die Alkoholreduzierung während der Hauptgärung im Bypaß durchgeführt wird.

0151668

308 116/314